# EUROPEAN PATENT SPECIFICATION

(11) **EP 2 102 523 B1**
(45) Date of publication and mention of the grant of the patent: **11.01.2012**
(21) Application number: 07866816.7
(22) Date of filing: 19.12.2007
(51) Int. Cl.: F16D 65/12

(54) **BRAKING BAND OF A DISK FOR A DISK BRAKE**
BREMSBAND EINER SCHEIBE FÜR EINE SCHEIBENBREMSE
BANDE DE FREINAGE POUR DISQUE DE FREIN À DISQUE

(30) Priority: 22.12.2006 IT MI20062495
(43) Date of publication of application: 23.09.2009
(73) Proprietor: Freni Brembo S.p.A., 24035 Curno (Bergamo) (IT)
(72) Inventor: GOLLER, Ralf Siegfried, 24040 Stezzano, Bergamo (IT)
(74) Representative: Leihkauf, Steffen Falk
(86) International application number: PCT/IT2007/000884
(87) International publication number: WO 2008/078352

(56) References cited:
- DE-A1- 4 430 280
- DE-A1- 10 041 646
- DE-A1- 19 819 425
- DE-A1-102004 056 645

## Description

The object of the present invention is a braking band for a ventilated disk for a disk brake.

A known type of disk for a disk brake with ventilated braking band comprises a support bell that can be connected for example to a vehicle wheel hub. A braking band co-operating with the calipers to apply the braking action on the vehicle is either connected or connectable to this bell by means of a connection. The braking band typically comprises at least two parallel plates that are separated by connecting elements ensuring the cohesion thereof. The gap between the plates forms a ventilation duct. Due to the air circulating between the plates, the disk is cooled not only on the outer sides, as in the case of a solid disk, but also on the inner sides of the braking band.

It is known that, during a braking action, the friction between the pads and the braking band turns the kinetic energy of the vehicle into heat which is absorbed by the braking system, mainly by the braking disk, from which it should be removed in order to avoid over-heating the same.

The cooling effect of the internal ventilation of the ventilated braking bands depends, besides on the area of the inner surface of the ventilation duct, also and mainly on the amount of fresh air that blows on said inner surface during a braking action.

In known braking disks, the amount of air blowing on the inner surfaces of the plates is undesirably low and an increase of the same is strongly desirable in order to obtain an improved cooling of the braking band and thus being capable of dissipating an increased amount of kinetic energy during hard breakings. DE 100 41 646 A1 discloses a braking band according to the preamble of claim 1.

The object of the present invention is thus to provide a braking band for a disk for a disk brake, which has such characteristics as to increase the amount of air that blows on the inner surfaces of the plates while braking.

This object is achieved by means of a braking band for a disk for a braking disk according to claim 1.

In fact, by analyzing the known braking bands, it has emerged that the amount of air blowing on the inner surface of the ventilation duct is limited by two distinct phenomena. The first phenomenon is the flow resistance that is determined by the global and local shape of the ventilation duct which restrains the speed and thus the total flow rate of the air flow through the ventilation duct. The second phenomenon is the formation of an air layer adjacent to the inner surface of the ventilation duct, which remains attached thereto and prevents that the air in the center of the flow may come in direct contact with the surface to be cooled or be mixed with the layer adjacent thereto. This phenomenon reduces the amount of air blowing on the surface to be cooled with the total flow rate of the air flow being the same.

According to the invention, the formation of a plurality of impressions that are arranged such as to define a surface structure with alternated ridges and bottoms or valleys in the flow direction from the inlet opening to the outlet opening increases the local speed of the air layer adjacent to the inner surface of the ventilation duct. This speed increase entails an increase in the kinetic energy of the air, which results in small turbulences and local detachments of the air from the surface which reduce the total flow resistance by increasing the speed and cause the outer layers to be mixed with the middlemost layers of the flow.

In accordance with an aspect of the invention, the amount of air blowing on the inner surface of the ventilation duct is particularly high, when the impressions have a depth exceeding 0.3 mm, preferably exceeding 0.5 mm, most preferably ranging between 0.5 mm and 1.0 mm.

In accordance with a further aspect of the invention, the diameter or, in other words, the maximum cross extension of the impressions is larger than 2 mm, preferably larger than 3 mm, most preferably this maximum cross extension ranges between 3 mm and 5 mm.

In accordance with a further aspect of the invention, the impressions have not being a part a pyramidal shape with for example 4, 6 or 8 sides. Alternatively, the impressions can be prism-shaped.

In accordance with a further aspect of the invention, the ridges being formed between the impressions have a smaller width than the cross-extension of the impressions.

According to an embodiment, the impressions are arranged such that the ridges that are formed between the impressions are connected with each other to form a grid-like or honeycomb pattern.

According to an alternative embodiment, the impressions are connected with each other to form a grid-like pattern about the ridges.

According to an alternative embodiment, not being a part of the invention, the impressions comprise rectilinear, curved, undulated, stepped or zigzag grooves that are arranged adjacent to each other.

According to an embodiment, substantially the whole inner surface of the plates (except for the connecting elements that may remain smooth) which defines the ventilation duct is configured with alternated ridges and bottoms or valleys. Alternatively, this alternated ridges and bottoms structure is provided only in a portion, preferably the radially outer half, of the ventilation duct.

The invention can be applied with much advantage both in cast iron and braking bands made of composite or carbon-ceramic material, for example of the type C/SiC (carbon-silicon carbide).

In order to better understand the invention and appreciate the advantages thereof, several exemplary nonlimiting embodiments of the same will be described herein below, with reference to the annexed drawings, in which:
Fig. 1 illustrates a perspective view of a ventilated brake disk;
Fig. 2 illustrates a radial section of the disk in Fig. 1;
Fig. 3a illustrates an embodiment of the present invention in radial section;
Fig. 3b is a partially sectioned front view of the brake disk of Fig. 3a;
Fig. 4a illustrates a second embodiment of the present invention in the radial section thereof;
Fig. 4b illustrates the brake disk in Fig. 4a in a partially sectioned front view;
Fig. 5a - 5g illustrate enlarged front views of an inner surface area of a ventilation duct of the braking band according to several embodiments;
Fig. 6a - 6g illustrate enlarged sectional views of an inner surface area of a ventilation duct of the braking band according to several embodiments.

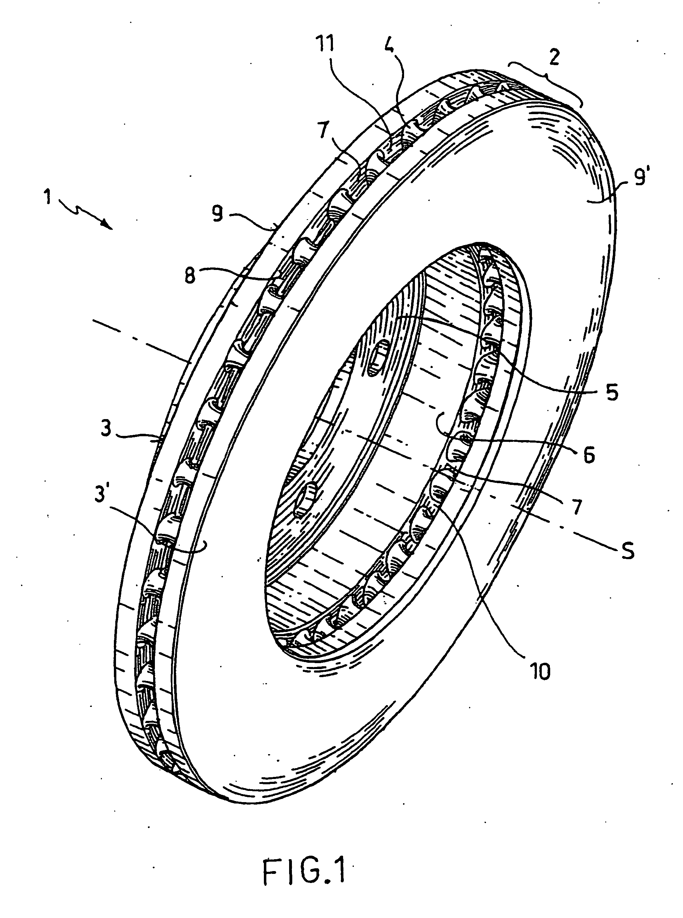

With reference to Fig. 1, with 1 has been generally designated a brake disk of a disk brake. The disk 1 is developed about a symmetry axis S. Said symmetry axis S is also the axis of rotation of the brake disk 1. The disk 1 comprises a braking band 2 with at least two plates 3 and 3' which are connected to each other by means of connecting elements 4. The braking band 2 is supported by a bell 5 by means of a connection 6 that can be configured such as to provide a linkage as one piece, or alternatively, a movable and/or removable linkage between the bell and the braking band. The bell 5 is arranged in the centre of the brake disk 1 and can be coupled by means of connection means to a vehicle wheel hub. The plates 3, 3' comprise an outer surface 9, 9' and an inner surface 8, 8', opposite the outer surface 9, 9'. The outer surfaces 9, 9' of the plates 3, 3' are the friction surfaces of the brake disk. The inner surfaces 8, 8' of the plates 3, 3' define a ventilation duct 7 extending from an inlet opening 10 arranged at a radially inner edge of the braking band 2 and an outlet opening 11 arranged at a radially outer side of the braking band 2. The terms "radially inner" and "radially outer" relate to the symmetry axis S corresponding to the axis of rotation of the brake disk 1 and braking band thereof 2.

According to the invention, at least one of the inner surfaces 8, 8' of the plates 3, 3' which define the ventilation duct 7 comprises a plurality of impressions 15 that are arranged such as to define in the flow direction from the inlet opening 10 to the outlet opening 11 a surface structure with alternated ridges 16 and bottoms or valleys 17.

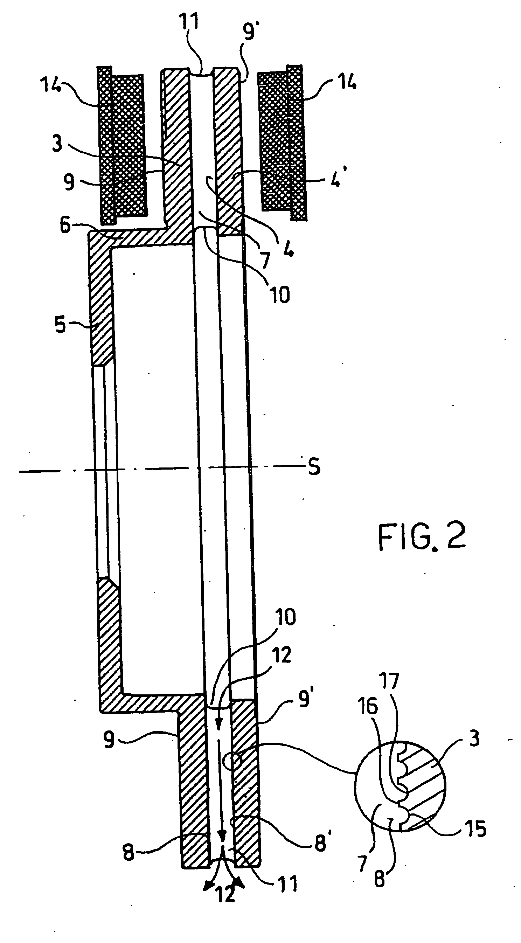

The operation of a brake disk 1 with the braking band according to the invention is described herein below with reference to Fig. 2.

During a braking action, the pads 14 of the brake disk are pushed against the friction surfaces 9, 9' of the braking band 2 of the brake disk 1. The friction process between the pads 14 and the braking band 2 turns the kinetic energy of the vehicle to be braked into heat which is absorbed by the plates 3, 3'. The rotation of the brake disk 1 generates a centrifuge force on the air contained within the ventilation duct 7, and thus a flow of cooling air 12, which is sucked from the inlet opening 10 and conveyed through the ventilation duct 7 to the outlet opening 11 from which it is released in the environment. This air flow cools the inner surfaces 8, 8' of the plates 3, 3' and prevents the braking band 2 from being over-heated.

The formation of a plurality of impressions 15 being arranged such as to define in the direction of the flow 12 a surface structure made of alternated ridges 16 and bottoms or valleys 17 increases the speed of the air flow and causes the outer layers to mix with the middlemost layers of the flow 12 thus resulting in the fact that a greater amount of air blows on the inner surfaces 8, 8' of the plates during the braking action.

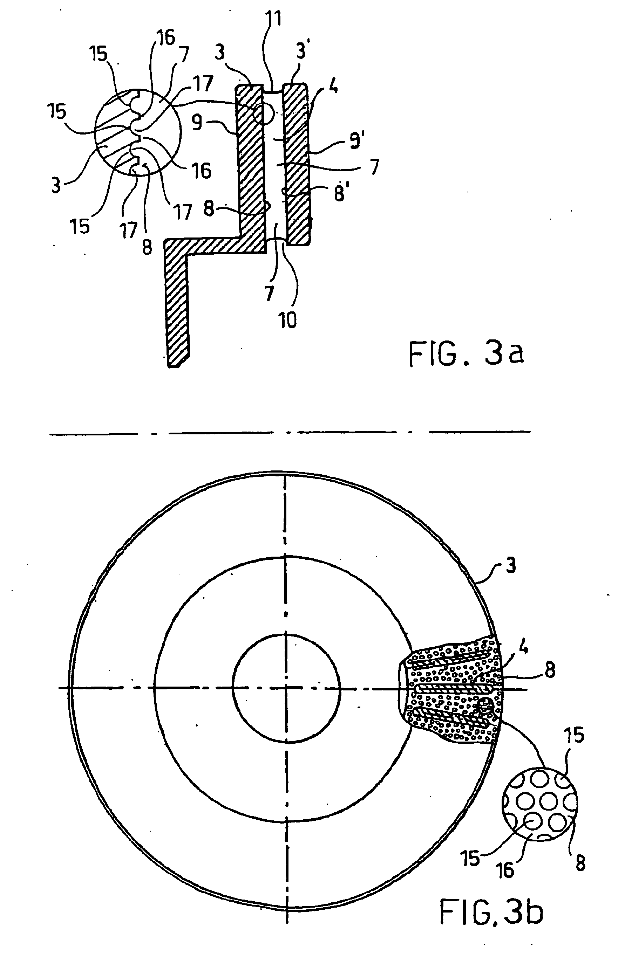

Fig. 2, 3a and 3b illustrate an embodiment of the invention, wherein the plates 3, 3' of the braking band 2 are connected by means of fin-like connecting elements 4. These fins are mainly orientated in the radial direction relative to the axis of rotation S of the brake disk 1 and are preferably arranged at an even pitch from each other. The inner surfaces 8, 8' of the plates 3, 3' comprise a plurality of spherical segment-shaped impressions 15 with a depth of more than 0.3 mm, preferably more than 0.5 mm, most preferably ranging between 0.5 mm and 1.0 mm, and a diameter, or in other words, a cross-extension parallel to the middle plane of the plate 3, 3', of more than 2 mm, preferably more than 3 mm, most preferably ranging between 3 mm and 5 mm.

In the embodiment, the ridges 16 being formed between the impressions 15 have a width that is equal or preferably smaller than the cross-extension of the same and the impressions 15 are arranged such that the ridges 16 are interconnected with each other to form a grid-like pattern.

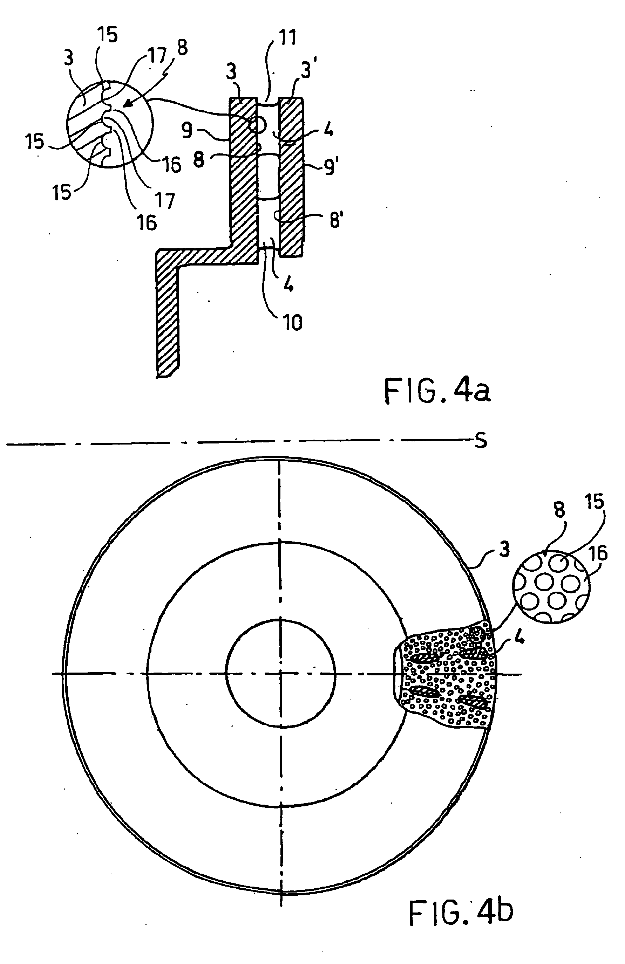

Fig. 4a and 4b illustrate a further embodiment of the present invention, wherein the plates 3 and 3' of the braking band 2 are connected by means of connecting elements 4 having a substantially circular, oval, or diamond-shaped section. Said elements 4 (the so-called stakes) can be arranged along circumferences relative to the axis of rotation S and form a series of annular sequences. The inner surfaces 8, 8' are advantageously structured according to the modes described with reference to Fig. 2, 3a and 3b.

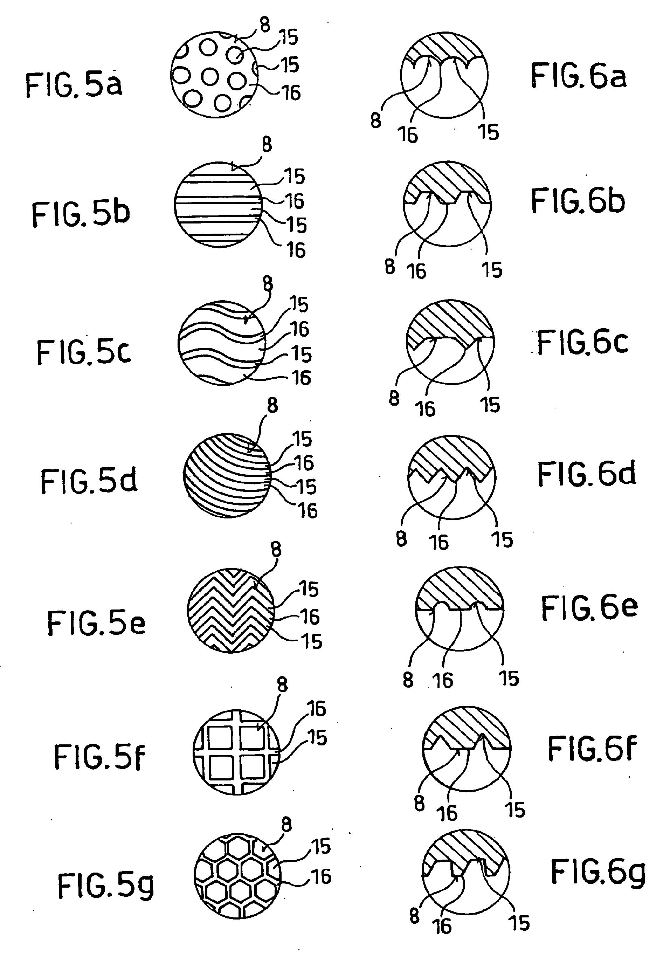

Fig. 5a to 5g illustrate front views of possible embodiments of the inner surfaces 8, 8'.

In accordance with the embodiment illustrated in Fig. 5a, the impressions 15 have a substantially spherical segment, according to the invention, or cylinder- or circular cone-shape and are arranged such that the ridges 16 that are formed therebetween are interconnected in a grid-like manner.

In accordance with the embodiment as illustrated in Fig. 5b, the impressions 15 have a substantially rectilinear elongated shape and are arranged parallel with each other such that the ridges 16 being formed therebetween are also rectilinear and parallel to each other.

In accordance with the embodiment as illustrated in Fig. 5c, the impressions 15 have a substantially undulated elongated shape and are arranged adjacent to each other such that the ridges 16 being formed between the impressions 15 are also undulated.

In accordance with the embodiment as illustrated in Fig. 5d, the impressions 15 have a curved shape and extend along circumferences of concentric circles such that also the ridges 16 that are formed therebetween are arc-of-circle shaped.

In accordance with the embodiment as illustrated in Fig. 5e, the impressions 15 and the ridges being formed therebetween have a zigzag shape.

In accordance with the embodiment as illustrated in Fig. 5f, the impressions 15 have, in the front view, a rectangular shape, preferably squared, and the ridges 16 being formed therebetween are interconnected to form a wafer-shaped grid-like structure.

In accordance with the embodiment illustrated in Fig. 5g, the front view of the impressions 15 shows a hexagonal shape and the ridges 16 being formed therebetween are connected with each other to form a substantially honeycomb shape.

Advantageously, the impressions can have a pyramidal shape with for example 4, 6 or 8 sides.

Fig. 6a to 6g illustrate sectional views of possible embodiments of the inner surfaces 8, 8'.

In accordance with the embodiment as illustrated in Fig. 6a, the impressions 15 have a sectional curved shape, for example a circular shape, and the ridges 16 between the impressions 15 have a cusp-like shape.

In accordance with the embodiment illustrated in Fig. 6b, the impressions 15 have a sectional trapezoid shape and also the ridges 16 between the impressions 15 have a sectional trapezoid shape.

In accordance with the embodiment as illustrated in Fig. 6c, the impressions 15 have a sectional trapezoid shape and the ridges 16 being formed between the impressions 15 have a substantially sectional triangular shape.

In accordance with the embodiment illustrated in Fig. 6d, the impressions 15 have a sectional triangular shape and also the ridges 16 between the impressions 15 have a sectional triangular shape.

In accordance with the embodiment as illustrated in Fig. 6e, the impressions 15 have a sectional arc shape, such as arc-of-circle shape, and the ridges formed between the impressions 15 have a substantially planar plateau.

In accordance with the embodiment as illustrated in Fig. 6f, the impressions 15 have a sectional triangular shape and the ridges 16 between the impressions 15 have a substantially planar plateau.

In accordance with the embodiment as illustrated in Fig. 6g, the impressions 15 and ridges 16 being formed between the impressions have a sectional scalene trapezium shape.

The size ranges of the impressions 15 and ridges 16, as well as the ratios between the sizes thereof which are described in relation with the embodiment in Fig. 2, 3a and 3b may also be advantageously applied to the embodiments illustrated in Fig. 5a to 5g and 6a to 6g.

The braking band as illustrated in the figures is a band made of cast iron. However, the surface structure of the inner surfaces 8, 8' described so far can be also provided with much advantage in braking bands made of composite or carbon-ceramic materials, such as of the type C/SiC (carbon-silicon carbide).

Obviously, to the braking band 2 according to the present invention, those skilled in the art, aiming at meeting contingent and specific requirements, may carry out further modifications and variations, all being however contemplated within the scope of protection of the invention, such as defined in the annexed claims.

## Claims

1. A braking band (2) of a disk (1) for a disk brake, comprising two plates (3, 3') being connected with each other by connecting elements (4), wherein the gap between said plates internally forms a ventilation duct (7) for cooling said braking band (2), wherein said ventilation duct (7) is at least partially defined by inner surfaces (8, 8') of the plates (3, 3'), and extends from an inlet opening (10) that is radially internal relative to an axis of rotation (S) of the braking band (2) to an outlet opening (11) that is radially external relative to said axis of rotation (S),
wherein at least one of the surfaces (8, 8') of the plates (3, 3') which define the ventilation duct (7) comprises a plurality of impressions (15) that are arranged such as to define a surfaces structure with alternated ridges (16) and bottoms or valleys (17) in the flow direction from the inlet opening (10) to the outlet opening (11), **characterized in that** said impressions (15) have a spherical segment-shape.

2. The braking band (2) according to claim 1, wherein said impressions (15) have a depth of more than 0.3 mm, preferably more than 0.5 mm, most preferably ranging between 0.5 mm and 1.0 mm.

3. The braking band (2) according to claim 1 or 2, wherein the impressions (15) have a diameter or maximum cross-extension of more than 2 mm, preferably more than 3 mm, most preferably ranging between 3 mm and 5 mm.

4. The braking band (2) according to any preceding claim, wherein the ridges (16) that are formed between the impressions (15) have a width smaller than the cross-extension of the impressions (15).

5. The braking band (2) according to any preceding claim, wherein the impressions (15) are arranged such that the ridges (16) being formed between the impressions (15) are interconnected to form a grid-like or honeycomb pattern.

6. The braking band (2) according to any claim 1 to 4, wherein the impressions (15) are connected with each other such as to form a grid-like groove pattern about the ridges (16).

7. The braking band (2) according to any preceding claim, wherein substantially the entire inner surface (8, 8') of the plates (3, 3') in that part thereof which defines the ventilation duct (7) is configured with alternated ridges (16) and bottoms (17).

8. The braking band (2) according to any claim 1 to 10, wherein aid surface structure with alternated ridges (16) and bottoms (17) is provided only in a portion of the ventilation duct(7).

9. The braking band (2) according to the preceding claim, wherein said surface structure with alternated ridges (16) and bottoms (17) is provided only in a radially outer half of the ventilation duct (7).

10. The braking band (2) according to any preceding claim, wherein said braking band (2) is made of composite or carbon-ceramic material of the C/SiC type.

11. A disk (1) for a disk brake, comprising a braking band (2) according to one of the preceding claims.

12. A disk brake, comprising a disk (1) for a disk brake according to claim 11.

## Patentansprüche

1. Bremsband (2) einer Scheibe (1) für eine Scheibenbremse, umfassend zwei Platten (3, 3'), welche durch Verbindungselemente (4) miteinander verbunden sind, wobei der Spalt zwischen den Platten innen einen Lüftungskanal (7) zum Kühlen des Bremsbandes (2) bildet, wobei der Lüftungskanal (7) wenigstens teilweise durch innere Flächen (8, 8') der Platten (3, 3') definiert ist und sich von einer Einlassöffnung (10), welche relativ zu einer Rotationsachse (S) des Bremsbandes (2) radial innen liegt, zu einer Auslassöffnung (11), welche relativ zu der Rotationsachse (S) radial außen liegt, erstreckt,
wobei wenigstens eine der Flächen (8, 8') der Platten (3, 3'), welche den Lüftungskanal (7) definieren, eine Mehrzahl von Vertiefungen (15) umfasst, welche derart angeordnet sind, dass sie eine Flächenstruktur mit alternierenden Kämmen (16) und Talsohlen oder Tälern (17) in der Strömungsrichtung von der Einlassöffnung (10) zu der Auslassöffnung (11) definieren, **dadurch gekennzeichnet, dass** die Vertiefungen (15) eine sphärische Segment-Form aufweisen.

2. Bremsband (2) nach Anspruch 1, wobei die Vertiefungen (15) eine Tiefe von mehr als 0.3 mm, vorzugsweise mehr als 0.5 mm, besonders bevorzugt im Bereich zwischen 0.5 mm und 1.0 mm aufweisen.

3. Bremsband (2) nach Anspruch 1 oder 2, wobei die Vertiefungen (15) einen Durchmesser oder eine maximale Quererstreckung von mehr als 2 mm, vorzugsweise mehr als 3 mm, besonders bevorzugt im Bereich zwischen 3 mm und 5 mm aufweisen.

4. Bremsband (2) nach einem der vorhergehenden Ansprüche, wobei die Kämme (16), welche zwischen den Vertiefungen (15) gebildet sind, eine Breite aufweisen, welche kleiner als die Quererstreckung der Vertiefungen (15) ist.

5. Bremsband (2) nach einem der vorhergehenden Ansprüche, wobei die Vertiefungen (15) derart angeordnet sind, dass die Kämme (16), welche zwischen den Vertiefungen (15) gebildet sind, miteinander verbunden sind, um ein gitterähnliches Muster oder ein Wabenmuster zu bilden.

6. Bremsband (2) nach einem der Ansprüche 1 bis 4, wobei die Vertiefungen (15) derart miteinander verbunden sind, dass sie ein gitterähnliches Rillenmuster um die Kämme (16) herum bilden.

7. Bremsband (2) nach einem der vorhergehenden Ansprüche, wobei im Wesentlichen die gesamte innere Fläche (8, 8') der Platten (3, 3') in dem Abschnitt davon, welcher den Lüftungskanal (7) definiert, mit alternierenden Kämmen (16) und Talsohlen (17) ausgebildet ist.

8. Bremsband (2) nach einem der Ansprüche 1 bis 10, wobei die Flächenstruktur mit alternierenden Kämmen (16) und Talsohlen (17) nur in einem Abschnitt des Lüftungskanals (7) bereitgestellt ist.

9. Bremsband (2) nach dem vorhergehenden Anspruch, wobei die Flächenstruktur mit alternierenden Kämmen (16) und Talsohlen (17) nur in einer radial äußeren Hälfte des Lüftungskanals (7) bereitgestellt ist.

10. Bremsband (2) nach einem der vorhergehenden Ansprüche, wobei das Bremsband (2) aus einem Verbundmaterial oder einem Kohlenstoff-Keramik-Material der C/SiC-Art gebildet ist.

11. Scheibe (1) für eine Scheibenbremse, umfassend ein Bremsband (2) nach einem der vorhergehenden Ansprüche.

12. Scheibenbremse, umfassend eine Scheibe (1) für eine Scheibenbremse nach Anspruch 11.

## Revendications

1. Bande de freinage (2) pour un disque (1) de frein à disque, comprenant deux plaques (3, 3') qui sont reliées l'une à l'autre par des éléments de liaison (4), de sorte que l'intervalle entre lesdites plaques forme à l'intérieur un conduit de ventilation (7) pour refroidir ladite bande de freinage (2), dans laquelle ledit conduit de ventilation (7) est au moins partiellement défini par des surfaces intérieures (8, 8') des plaques (3, 3'), et s'étend depuis une ouverture d'entrée (10) qui est radialement à l'intérieur par rapport à un axe de rotation (S) de la bande de freinage (2) jusqu'à une ouverture de sortie (11) qui est radialement à l'extérieur par rapport audit axe de rotation (S),
dans laquelle l'une au moins des surfaces (8, 8') des plaques (3, 3') qui définissent le conduit de ventilation (7) comprend une pluralité d'impressions qui sont agencées de manière à définir une structure de surface avec des nervures (16) et avec des creux ou des vallées (17) en alternance dans la direction d'écoulement depuis l'ouverture d'entrée (10) vers l'ouverture de sortie (11), **caractérisée en ce que** lesdites impressions (15) ont une forme en segment de sphère.

2. Bande de freinage (2) selon la revendication 1, dans laquelle lesdites impressions (15) ont une profondeur supérieure à 0,3 mm, de préférence supérieure à 0,5 mm, et de la façon la plus préférée dans une plage entre 0,5 mm et 1,0 mm.

3. Bande de freinage (2) selon la revendication 1 ou 2, dans laquelle les impressions (15) ont un diamètre ou une extension transversale maximum supérieure à 2 mm, de préférence supérieure à 3 mm, de la façon la plus préférée dans une plage entre 3 mm et 5 mm.

4. Bande de freinage (2) selon l'une quelconque des revendications précédentes, dans laquelle les nervures (16) qui sont formées entre les impressions (15) ont une largeur plus petite que l'extension transversale des impressions (15).

5. Bande de freinage (2) selon l'une quelconque des revendications précédentes, dans laquelle les impressions (15) sont agencées de telle façon que les nervures (16) qui sont formées entre les impressions (15) sont interconnectées pour former un motif semblable à un grillage ou à un nid d'abeilles.

6. Bande de freinage (2) selon l'une quelconque des revendications 1 à 4, dans laquelle les impressions (15) sont connectées les unes aux autres de manière à former un motif de gorges semblable à un grillage autour des nervures (16).

7. Bande de freinage (2) selon l'une quelconque des revendications précédentes, dans laquelle sensiblement la totalité de la surface intérieure (8, 8') des plaques (3, 3'), dans la partie de celle-ci qui définit le conduit de ventilation (7), est configurée avec des nervures (16) et des creux (17) en alternance.

8. Bande de freinage (2) selon l'une quelconque des revendications 1 à 7, dans laquelle ladite structure de surface avec des nervures (16) et des creux (17) en alternance est prévue uniquement dans une portion du conduit de ventilation (7).

9. Bande de freinage (2) selon la revendication précédente, dans laquelle ladite structure de surface avec des nervures (16) et des creux (17) en alternance est prévue uniquement dans une moitié radialement extérieure du conduit de ventilation (7).

10. Bande de freinage (2) selon l'une quelconque des revendications précédentes, dans laquelle ladite bande de freinage (2) est réalisée en un matériau composite ou un matériau carbone/céramique du type C/SiC.

11. Disque (1) pour un frein à disque, comprenant une bande de freinage (2) selon l'une des revendications précédentes.

12. Frein à disque, comprenant un disque (1) pour un frein à disque selon la revendication 11.
